# EUROPEAN PATENT APPLICATION

(11) **EP 4 447 255 A1**
(43) Date of publication of application: **16.10.2024**
(21) Application number: 23197558.2
(22) Date of filing: 14.09.2023
(51) Int. Cl.: H02J 7/00

(54) **CONSTANT VOLTAGE SERIES FORMATION SYSTEM FOR BATTERY CELLS**

(30) Priority: 13.04.2023 CN 202310401271
(71) Applicant: Guangdong HYNN Technologies Co., Ltd., Dongguan, Guangdong 518000 (CN)
(72) Inventor: Wu, Hui, Dongguan (CN); Lin, Risheng, Dongguan (CN); Wu, Weijie, Dongguan (CN); Xia, Pan, Dongguan (CN); Wang, Shoumo, Dongguan (CN)
(74) Representative: Meyer, Thorsten

(57) **Abstract**

A constant voltage series formation system for battery cells includes multiple battery cell control modules connected in series. A first battery cell control module is electrically connected with another end of the total filter current limiting module, a last battery cell control module is electrically connected with a negative terminal of the output end of the energy feedback module, and each of the battery cell control modules is configured to electrically connect with a battery cell. A state switch module is configured to connect with or bypass the battery cell, so that the battery cell is connected in series to a main power loop for constant current charging, and maintained in constant voltage charging once a voltage of the battery cell reaches a preset value. In such a way, the voltage of each battery cell is consistent, thereby optimizing the entire formation process and improving the formation efficiency.

## Description

### FIELD OF THE INVENTION

The present invention relates to the technical field of processing equipment of lithium ion cells, in particular to a constant voltage series formation system for battery cells.

### BACKGROUND OF THE INVENTION

As well known, formation is a necessary stage for the production of a battery cell, that is, the battery cell after assembled is charged and discharged under certain conditions, so as to activate the active substance on the electrodes of the battery cell, and meanwhile generate a dense film on the anode surface to protect the entire chemical interface. In the formation process of the battery cell, it is necessary to first carry out constant current charging, and then convert to constant voltage charging in a proper time. Conventionally, in the series formation charging scheme, multiple battery cells are connected in series, and a single DC/DC module is configured to actuate the multiple battery cells, which can reduce line loss and improve efficiency.

However, each battery cell may have different physical and chemical properties and different consistency due to the difference in the production process of the battery cells, and constant voltage point for each battery cell is also different. In the series formation charging scheme, the entire battery cells will stop charging once a certain battery cell reaches the preset voltage. Therefore, it is necessary to first move the battery cell to the device that supports constant voltage charging to carry out the constant voltage, so that the voltage of each battery cell is consistent. By this token, the formation process becomes complex due to the additional steps, resulting in a low efficiency.

Therefore, it is necessary to provide a formation system with constant voltage function for serial battery cells to optimize the entire formation process and improve the formation efficiency.

### SUMMARY OF THE INVENTION

An aspect of the present invention is to provide a formation system with constant voltage function for serial battery cells, thereby optimizing the entire formation process and improving the formation efficiency.

To achieve the above aspect, the present invention provides a constant voltage series formation system for battery cells, which includes an energy feedback module; a total filter current limiting module, one end of which is electrically connected with a positive terminal of an output end of the energy feedback module; a plurality of battery cell control modules, electrically connected in series with one another; wherein a first battery cell control module is electrically connected with another end of the total filter current limiting module, a last battery cell control module is electrically connected with a negative terminal of the output end of the energy feedback module, and each of the battery cell control modules is configured to electrically connect with a battery cell. The battery cell control module includes a state switch module configured to connect with or bypass the battery cell, so that the battery cell is connected in series to a main power loop for constant current charging, and maintained in constant voltage charging once a voltage of the battery cell reaches a preset value; and the battery cell is performed with constant current charging first and then constant voltage charging so that the voltage of each battery cell is consistent.

In a preferable embodiment, the battery cell control module further includes a primary filter, coupled between an input end and the state switch module and configured to realize an input filtering of the battery cell control module; a secondary filter, coupled to another end of the state switch module and configured to realize an output filtering of the battery cell control module; a reverse connection preventing module, coupled between the state switch module and a positive electrode of the battery cell for preventing the battery cell from being reversely connected; and a monitoring module, coupled to two ends of the battery cell and configured to collect a voltage, a current a temperature of the battery cell.

In a preferable embodiment, the state switch module includes a main MOS transistor and a bypass MOS transistor, one end of the main MOS transistor and one end of the bypass MOS transistor are connected in parallel with the output end of the primary filter, another end of the main MOS transistor is connected in parallel with the reverse connection preventing module, the secondary filter, the main MOS transistor; the battery cell is connected in series between the reverse connection preventing module and the secondary filter; and another end of the bypass MOS transistor and another end of the secondary filter are connected to an input end of a next battery cell control module. When constant current charging is performed, the main MOS transistor is connected and the bypass MOS transistor is disconnected, so that the battery cell is switched to the main power loop for charging; when the battery cell reaches a constant voltage point to enter constant voltage charging, the main MOS transistor is disconnected and the bypass MOS transistor is connected, so that no current of the main power loop flows through the battery cell, and the current of the main power loop is bypassed to a next battery cell control module.

In a preferable embodiment, the reverse connection preventing module includes a first MOS transistor and a second MOS transistor which are connected in series between the state switch module and the positive electrode of the battery cell in different directions for preventing the battery cell from being reversely connected.

In a preferable embodiment, drains of the first MOS transistor and the second MOS transistor are connected in series, a source of the first MOS transistor is connected to the state switch module, and a source of the second MOS transistor is connected to the positive electrode of the battery cell.

In a preferable embodiment, the monitoring module includes a voltage sampling circuit, a current sampling circuit, and a temperature sampling circuit; the voltage sampling circuit is connected in parallel with two ends of the battery cell for directly collecting a voltage at the two ends of the battery cell; the current sampling circuit includes a current sampling resistor connected in series with the battery cell for collecting a current of the battery cell; and the temperature sampling circuit includes a thermistor configured at a monitoring position for collecting a temperature of the battery cell.

In a preferable embodiment, the primary filter includes an inductor and a first capacitor connected in parallel, another end of the inductor is connected to an input end of the state switch module, another end of the first capacitor is connected to an input end of a next battery cell control module; and the first capacitor of the primary filter of the last battery cell control module is connected to a negative terminal of the output end of the energy feedback module.

In a preferable embodiment, the secondary filter includes a second capacitor, one end of the second capacitor is connected between the state switch module and the reverse connection preventing module, and another end of the second capacitor is connected to an input end of a next the battery cell control module.

In a preferable embodiment, the energy feedback module includes an AC/DC module and a DC/DC module electrically connected with one another, the AC/DC module is connected as an input end of the energy feedback module, and the DC/DC module is connected as an output end of the energy feedback module.

In a preferable embodiment, during constant current charging, the energy feedback module served as a power supply source is configured to supply power to the battery cell, and the state switch module enables the battery cell control module to connect with the main power loop to charge each battery cell in series; once the voltage of one of the battery cells reaches the preset value, the state switch module of the battery cell control module corresponding to the battery cell is switched to disconnect the battery cell without affecting the constant current charging of other battery cells; during constant voltage charging, the monitoring module is configured to detect the voltage of the battery cell; once the voltage of the battery cell is detected to be less than the preset value, the state switch module is switched to connect the battery cell to the main power loop to maintain a constant voltage of the battery cell.

Compared with the prior art, the constant voltage series formation system for battery cells of the present invention has the following technical effects.

First, a plurality of battery cell control modules are electrically connected in series, and each of the battery cells control module is configured for electrical connection with a battery cell and provided with a state switch module. By using the state switch module, the battery cell can be connected or bypassed, so that the battery cell can be connected in series to the main power loop for constant current charging, and the current battery cell can be maintained in constant voltage charging once the voltage of a certain battery cell reaches a preset value. That is to say, the battery cell can be performed with constant current charging firstly and then constant voltage charging, so that the voltage of each battery cell is consistent. Therefore, the formation system of the present invention may achieve constant voltage charging function of the battery cell in addition to the basic constant current charging function, thereby optimizing the entire formation process, and improving the production efficiency and the quality of the battery.

Second, once a certain battery cell achieves the expected charging effect, the battery cell will be bypassed by means of the corresponding state switch module, which does not affect any working conditions of other battery cells.

Third, one end of the total filter current limiting module is electrically connected to the positive terminal of the output end of the energy feedback module, and the other end is connected to the input end of the first battery cell control module. Therefore, in the constant voltage charging stage, the current ripple of the constant voltage stage is smaller due to the existence of the total filter current limiting module, which ensures the current quality of the input end of each battery cell control module, and makes the battery charging data more real and reliable.

### BRIEF DESCRIPTION OF THE DRAWINGS

The accompanying drawings facilitate an understanding of the various embodiments of this invention. In such drawings:
FIG. 1 is a block diagram of a constant voltage series formation system for battery cells according to the invention;
FIG. 2 is a block diagram of a battery cell control module according to the invention;
FIG. 3 is a schematic diagram of the circuit structure of the battery cell control module according to the invention; and
FIG. 4 is a block diagram of a constant voltage series formation system for battery cells according to the invention.

### DETAILED DESCRIPTION OF ILLUSTRATED EMBODIMENTS

In the description of the embodiments of the present application, it is to be understood that the terms "vertical", "horizontal", "up", "down", "front", "back", "left", "right", "top", "bottom", "inside", "outside", etc. indicate a position relationship based on the position relationship shown in the attached drawings, which is only for the purpose of facilitating the description and simplifying the description of the present application, but not for indicating or implying that the referred device or element must have such a particular orientation, or a construction and operation in such a particular orientation, and therefore shall not be construed as a limitation of the present application. In addition, the features defined as "first" and "second" may explicitly or implicitly include one or more of the features, which are only used to distinguish and describe the features without any order.

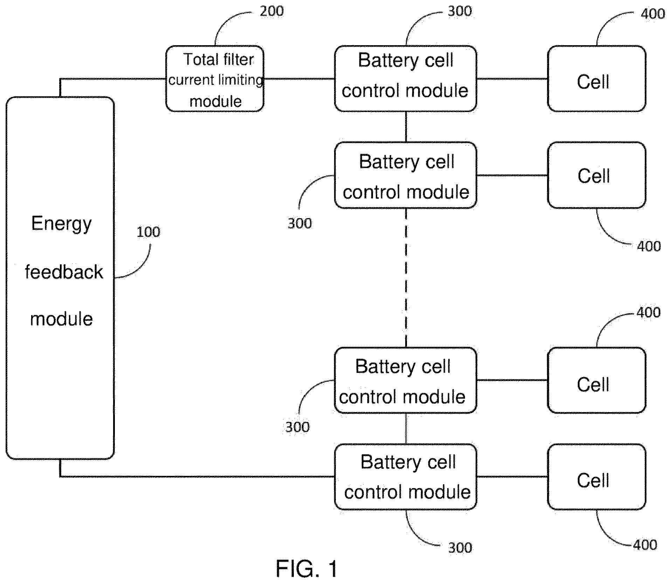

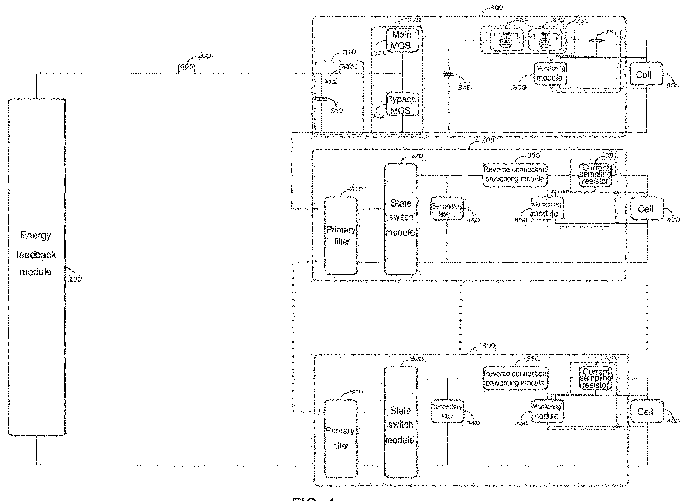

Referring to FIGs. 1 and 4, a constant voltage series formation system for battery cells according to one embodiment of the present invention includes an energy feedback module 100, a total filter current limiting module 200, and a plurality of battery cell control modules 300. Specifically, one end of the total filter current limiting module 20 is electrically connected with a positive terminal of an output end of the energy feedback module 100; each of the battery cell control modules 300 is electrically connected in series with one another; a first battery cell control module 300 is electrically connected with another end of the total filter current limiting module 200, a last battery cell control module 300 is electrically connected with a negative terminal of the output end of the energy feedback module 100, and each of the battery cell control modules 300 is configured to electrically connect with a battery cell.

In the present invention, the battery cell control module 300 includes a state switch module 320 having different switching states for connecting with or bypassing the battery cell 400 of the battery cell control module 300, that is, the battery cell 400 can be connected in series with a main power loop for constant current charging, or disconnected with the main power loop and maintained in constant voltage charging once a voltage of the battery cell reaches a preset value. By switching different states of the state switch module 320, the battery cells 400 can be charged at constant current first and then at constant voltage, and finally the voltage of each battery cell 400 is consistent.

In the invention, a plurality of battery cell control modules 300 are arranged in series, thus a plurality of battery cells 400 in series can be charged at the same time, and furthermore, the constant voltage charging of a certain battery cell 400 will not affect the working condition of other battery cells 400, such as constant current condition, constant voltage condition or bypass condition.

In one embodiment of the invention, the energy feedback module 100 includes an AC/DC module and a DC/DC module. The AC/DC module is electrically connected with the DC/DC module, the AC/DC module is the input end of the energy feedback module 100, and the DC/DC module is the output end of the energy feedback module 100. Noted that, the specific arrangements of the AC/DC module and the DC/DC module are common in this field, which is not described in detail.

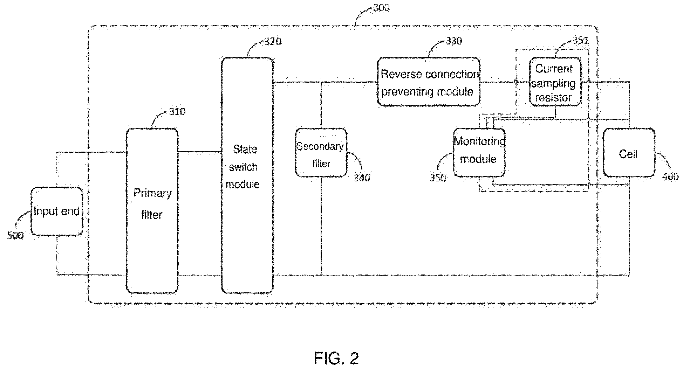

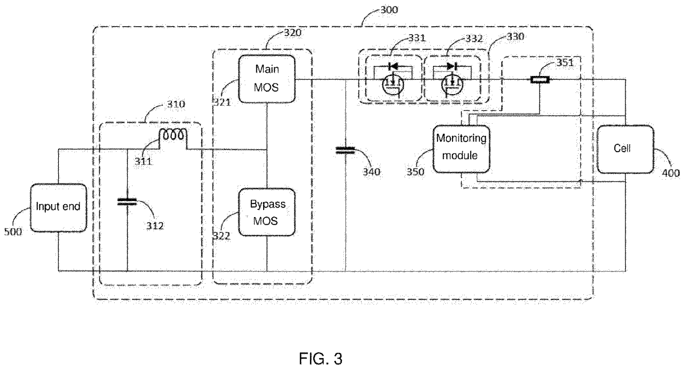

Referring to FIGs. 2-3, in the present invention, the battery cell control module 300 further includes a primary filter 310, a reverse connection preventing module 330, a secondary filter 340, and a monitoring module 350. Specifically, the primary filter 310 is coupled between an input end 500 and the state switch module 320 for realizing an input filtering of the battery cell control module 300. The secondary filter 340 is coupled to another end of the state switch module 320 for realizing an output filtering of the battery cell control module 300. Based the arrangements of the primary filter 310 and the secondary filter 340, the current and the voltage may be filtered when a constant current charging is switched from the static or a constant voltage charging is switched from a constant current charging, so as to prevent excessive current and voltage spikes during the state switching. That is to say, the current of the main power loop will not be impacted under the conditions of constant current charging and constant voltage charging.

In the present invention, based on the arrangement of the state switch module 320, the battery cell control module 300 can selectively connect to or bypass the battery cell 400, and can also connect to/bypass the battery cell 400 with a certain duty cycle to achieve constant voltage. Therefore, due to the existence of the battery cell control module 300, the present formation system can operate in a working condition such as constant current/constant voltage/bypass, without impacting on the current of the main power loop.

Furthermore, the reverse connection preventing module 330 is coupled between the state switch module 320 and a positive electrode of the battery cell 400 for preventing the battery cell from being connected reversely. The monitoring module 350 is coupled to two ends of the battery cell 400 for collecting a voltage, a current a temperature of the battery cell 400.

Referring to FIGs. 2-4, in an embodiment of the present invention, the primary filter 310 includes an inductor 311 and a first capacitor 312 connected in parallel, another end of the inductor 311 is connected to the input end of the state switch module 320, another end of the first capacitor 312 is connected to an input end of a next battery cell control module 300. The secondary filter 340 includes a second capacitor, one end of the second capacitor is connected between the state switch module 320 and the reverse connection preventing module 330, and another end of the second capacitor is connected to the input end of the next battery cell control module 300. Furthermore, the inductor 311 and the first capacitor 312 of the primary filter 310 of the first battery cell control module 300 is connected to the total filter current limiting module 200, and the first capacitor 312 of the primary filter 310 of the last battery cell control module 300 and the second capacitor of the secondary filter 340 are both connected to the negative terminal of the output end of the energy feedback module 100. When a constant current charging of the battery cell 400 of the battery cell control module 300 is switched from the static, or a constant voltage charging is switched from the constant current charging, the current and the voltage may be filtered by the inductor 311, the first capacitor 312 and the second capacitor, so as to prevent excessive current and voltage spikes during the state switching.

It should be understood that, the primary filter 310 and the secondary filter 340 are not limited to the above arrangements and structures, other filter structures may be feasible.

Referring to FIGs. 2-3, in an embodiment of the present invention, the state switch module 320 includes a main MOS transistor 321 and a bypass MOS transistor 322. Specifically, one end of the main MOS transistor 321 and one end of the bypass MOS transistor 322 are connected in parallel with the output end of the primary filter 310, and specifically connected with one end of the inductor 311 in parallel. Another end of the main MOS transistor 321 is connected in parallel with the reverse connection preventing module 330 and the second capacitor of the secondary filter 340, and the battery cell 400 is connected in series between the reverse connection preventing module 330 and the second capacitor of the secondary filter 340. Furthermore, the other end of the bypass MOS transistor 322 and the other end of the second capacitor of the secondary filter 340 are further jointly connected to the input end of the battery cell control module 300. When the constant current charging is carried out, the main MOS transistor 321 is connected and the bypass MOS transistor 322 is disconnected, so that the battery cell 400 is switched to the main power loop for charging. The main power loop here is mentioned that the total current loop output by the energy feedback module 100. When the battery cell 400 reaches the constant voltage point to carry out the constant voltage charging, the main MOS transistor 321 will be disconnected, and the bypass MOS transistor 322 will be connected, once the monitoring module 350 detects that the voltage of the battery cell 400 is greater than a preset value. At this time, the current of the main power loop will not flow through the battery cell 400; instead, the current of the main power loop is bypassed to the next battery cell control module 300 without affecting the constant current charging of other battery cell control modules 300. Once the monitoring module 350 detects that the voltage of the battery cell 400 is less than the preset value, the bypass MOS transistor 322 will be disconnected, and the main MOS transistor 321 will be connected again, at this time, the main power loop current will flow through the battery cell 400 again. In such a way, the on-off state of the state switch module 320 is alternately switched according to a certain duty cycle to achieve the purpose of constant voltage.

Referring to FIGs. 2-3, in an embodiment of the present invention, the reverse connection preventing module 330 includes a first MOS transistor 331 and a second MOS transistor 332 which are connected in series between the state switch module 320 and the positive electrode of the battery cell 400 in different directions, specifically between the main MOS transistor 321 an the positive electrode of the battery cell 400, for preventing the battery cell from being connected reversely. In such a way, accidental reversal connection for the battery cell 400 is prevented to avoid dangerous situation such as the occurrence of fire.

Specifically, drains of the first MOS transistor 331 and the second MOS transistor 332 are connected in series, a source of the first MOS transistor 331 is connected to the main MOS transistor 321 of the state switch module 320, and a source of the second MOS transistor 332 is connected to the positive electrode of the battery cell 400. When the battery cells 400 are connected to the system, the first MOS transistor 331 and the second MOS transistor 332 will be in the off state to provide sufficient time for the control unit to make a judgment without causing any damage. When the formation is carried out, the first MOS transistor 331 and the second MOS transistor 332 will be turned on, to avoid energy loss.

Referring to FIGs. 2-3, in an embodiment of the present invention, the monitoring module 350 includes a voltage sampling circuit, a current sampling circuit, and a temperature sampling circuit. Specifically, the voltage sampling circuit is connected in parallel with two ends of the battery cell for directly collecting the voltage at two ends of the battery cell 400, and transmitting the voltage data to the monitoring module 350. The current sampling circuit includes a current sampling resistor 351 connected in series with the battery cell 400, preferably connected in series between the source of the second MOS transistor 332 and the positive electrode of the battery cell 400, for collecting the current of the battery cell 400, so that the current data can be transmitted in real time to the monitoring module 350. The temperature sampling circuit includes a thermistor configured at a monitoring position electrically connected to the monitoring module 350, thereby collecting the temperature of the battery cell 400 and transmitting the temperature to the monitoring module 350 in real time. By this token, the voltage sampling circuit, the current sampling circuit and temperature sampling circuit in the invention are all electrically connected to the monitoring module 350, so that the voltage, the current and the temperature data of the battery cell 400 can be monitored in real time and timely fed back to the monitoring module 350. Once the data is abnormal, the state switch module 320 can make a quick response and adjustment to maintain the steady system.

As shown in FIG. 1 and FIG. 4, in the present invention, when multiple battery cells 400 in series enter constant voltage condition at the same time, the on-off state of the main MOS transistor 321 and the bypass MOS transistor 322 of the state switch module 320 of each battery cell control module 300 are switched alternatively at a certain frequency. It is necessary to add a filter element in order to further improve the current quality of the main power loop. In view of this reason, a total filter current limiter module 200 is configured to the positive terminal of the output end of the energy feedback module 100. In the embodiment, the total filter current limiter module 200 is an inductor. In such a way, the current quality of the main power loop still can be maintained even that the multiple battery cells 400 are under constant voltage condition, which ensures the current quality of the input end 500 of each battery cell control module 300.

The working principle of the constant voltage series formation system of the present invention is explained in combination with FIGs. 1-4.

In the formation stage, the battery cell 400 needs to be charged at constant current and then charged at constant voltage, so that the voltage of each battery cell 40 can be consistent.

First, each battery cell 400 is connected to the formation system, with each battery cell 40 electrically connected to one battery cell control module 300 after installation.

During constant current charging, the energy feedback module 100 served as a constant current power supplies power to each battery cell 400. First, the state switch module 320 of the battery cell control module 300 is operated to connect the battery cell control module 300 with the main power loop to charge each battery cell 400 in series. Specifically, the main MOS transistor 321 of the state switch module 320 is connected and the bypass MOS transistor 322 is disconnected, so that the battery cell 400 is connected to the main power loop for charging. At this time, multiple battery cells 400 in series are charged simultaneously.

Once the voltage of one battery cell 400 reaches the preset value, such as, is greater than the preset value, the state switch module 320 of the battery cell control module 300 corresponding to the connected battery cell 400 performs the switching. Specifically, the main MOS transistor 321 of the state switch module 320 is disconnected, and the bypass MOS transistor 322 is connected, at this time, the current of the main power loop does not flow through the current battery cell 400 to disconnect the current battery cell 400, instead, the current of the main power loop is bypassed to the next battery cell control module 300, which will not affect the continued charging of the remain battery cells 400.

When a certain battery cell 400 is performed with constant voltage charging, the monitoring module 350 detects the voltage of the battery cell 400 in real time. When the voltage of the battery cell 400 is detected to be less than the preset value, the state switch module 320 of the battery cell control module 300 corresponding to connected battery cell 400 performs the switching again to connect the battery cell 400 to the main power loop. Specifically, the main MOS transistor 321 of the state switch module 320 is connected, and the bypass MOS transistor 322 is disconnected, so that the battery cell 400 is connected to the main power loop again for charging. In such a way, the on-off state of the state switch module 320 is alternately switched according to a certain duty cycle to achieve the purpose of constant voltage, furthermore, the constant voltage charging of the battery cell 400 will not affect the working condition of other battery cells 400, such as constant current condition, constant voltage condition or bypass condition.

In summary, the constant voltage series formation system for battery cells of the invention has the following technical effects.

First, a plurality of battery cell control modules 300 are electrically connected in series, and each of the battery cell control modules 300 is configured for electrical connection with a battery cell 400 and provided with a state switch module 320. By using the state switch module 320, the battery cell 400 can be connected or bypassed, so that the battery cell 400 can be connected in series to the main power loop for constant current charging, and the current battery cell 400 can be maintained in constant voltage charging once the voltage of a certain battery cell 400 reaches a preset value. That is to say, the battery cell 400 can be performed with constant current charging firstly and then constant voltage charging, so that the voltage of each battery cell 400 is consistent. Therefore, the formation system of the present invention may achieve constant voltage charging function of the battery cell 400 in addition to the basic constant current charging function, thereby optimizing the entire formation process, and improving the production efficiency and the quality of the battery.

Second, once a certain battery cell 400 achieves the expected charging effect, the battery cell 400 will be bypassed by means of the corresponding state switch module 320, which does not affect any working conditions of other battery cells 400.

Third, one end of the total filter current limiting module 200 is electrically connected to the positive terminal of the output end of the energy feedback module 100, and the other end is connected to the input end of the first battery cell control module 300. Therefore, in the constant voltage charging stage, the current ripple of the constant voltage stage is smaller due to the existence of the total filter current limiting module 200, which ensures the current quality of the input end 500 of each battery cell control module 300, and makes the battery charging data more real and reliable.

## Claims

1. A constant voltage series formation system for battery cells, comprising:
an energy feedback module;
a total filter current limiting module, one end of which is electrically connected with a positive terminal of an output end of the energy feedback module;
a plurality of battery cell control modules, electrically connected in series with one another; wherein a first battery cell control module is electrically connected with another end of the total filter current limiting module, a last battery cell control module is electrically connected with a negative terminal of the output end of the energy feedback module, and each of the battery cell control modules is configured to electrically connect with a battery cell;
wherein the battery cell control module comprises a state switch module configured to connect with or bypass the battery cell, so that the battery cell is connected in series to a main power loop for constant current charging, and maintained in constant voltage charging once a voltage of the battery cell reaches a preset value; and the battery cell is performed with constant current charging first and then constant voltage charging so that the voltage of each battery cell is consistent.

2. The constant voltage series formation system for battery cells according to claim 1, wherein the battery cell control module further comprises:
a primary filter, coupled between an input end and the state switch module and configured to realize an input filtering of the battery cell control module;
a secondary filter, coupled to another end of the state switch module and configured to realize an output filtering of the battery cell control module;
a reverse connection preventing module, coupled between the state switch module and a positive electrode of the battery cell for preventing the battery cell from being reversely connected; and
a monitoring module, coupled to two ends of the battery cell and configured to collect a voltage, a current a temperature of the battery cell.

3. The constant voltage series formation system for battery cells according to claim 2, wherein the state switch module comprises a main MOS transistor and a bypass MOS transistor, one end of the main MOS transistor and one end of the bypass MOS transistor are connected in parallel with the output end of the primary filter, another end of the main MOS transistor is connected in parallel with the reverse connection preventing module, the secondary filter, the main MOS transistor; the battery cell is connected in series between the reverse connection preventing module and the secondary filter; and another end of the bypass MOS transistor and another end of the secondary filter are connected to an input end of a next battery cell control module;
when constant current charging is performed, the main MOS transistor is connected and the bypass MOS transistor is disconnected, so that the battery cell is switched to the main power loop for charging; when the battery cell reaches a constant voltage point to enter constant voltage charging, the main MOS transistor is disconnected and the bypass MOS transistor is connected, so that no current of the main power loop flows through the battery cell, and the current of the main power loop is bypassed to a next battery cell control module.

4. The constant voltage series formation system for battery cells according to claim 2, wherein the reverse connection preventing module includes a first MOS transistor and a second MOS transistor which are connected in series between the state switch module and the positive electrode of the battery cell in different directions for preventing the battery cell from being reversely connected.

5. The constant voltage series formation system for battery cells according to claim 4, wherein drains of the first MOS transistor and the second MOS transistor are connected in series, a source of the first MOS transistor is connected to the state switch module, and a source of the second MOS transistor is connected to the positive electrode of the battery cell.

6. The constant voltage series formation system for battery cells according to claim 2, wherein the monitoring module comprises a voltage sampling circuit, a current sampling circuit, and a temperature sampling circuit; the voltage sampling circuit is connected in parallel with two ends of the battery cell for directly collecting a voltage at the two ends of the battery cell; the current sampling circuit comprises a current sampling resistor connected in series with the battery cell for collecting a current of the battery cell; and the temperature sampling circuit comprises a thermistor configured at a monitoring position for collecting a temperature of the battery cell.

7. The constant voltage series formation system for battery cells according to claim 2, wherein the primary filter comprises an inductor and a first capacitor connected in parallel, another end of the inductor is connected to an input end of the state switch module, another end of the first capacitor is connected to an input end of a next battery cell control module; and the first capacitor of the primary filter of the last battery cell control module is connected to a negative terminal of the output end of the energy feedback module.

8. The constant voltage series formation system for battery cells according to claim 2, wherein the secondary filter comprises a second capacitor, one end of the second capacitor is connected between the state switch module and the reverse connection preventing module, and another end of the second capacitor is connected to an input end of a next the battery cell control module.

9. The constant voltage series formation system for battery cells according to claim 1, wherein the energy feedback module comprises an AC/DC module and a DC/DC module electrically connected with one another, the AC/DC module is connected as an input end of the energy feedback module, and the DC/DC module is connected as an output end of the energy feedback module.

10. The constant voltage series formation system for battery cells according to any of claims 2-9, wherein during constant current charging, the energy feedback module served as a power supply source is configured to supply power to the battery cell, and the state switch module enables the battery cell control module to connect with the main power loop to charge each battery cell in series;
once the voltage of one of the battery cells reaches the preset value, the state switch module of the battery cell control module corresponding to the battery cell is switched to disconnect the battery cell without affecting the constant current charging of other battery cells;
during constant voltage charging, the monitoring module is configured to detect the voltage of the battery cell; once the voltage of the battery cell is detected to be less than the preset value, the state switch module is switched to connect the battery cell to the main power loop to maintain a constant voltage of the battery cell.
